# EUROPEAN PATENT APPLICATION

(11) **EP 1 519 270 A1**
(43) Date of publication of application: **30.03.2005**
(21) Application number: 03738549.9
(22) Date of filing: 27.06.2003
(51) Int. Cl.: G06F 11/00

(54) **INFORMATION PROCESSING UNIT AND METHOD, RECORDING MEDIUM, AND PROGRAM**

(30) Priority: 28.06.2002 JP 2002190001
(71) Applicant: Sony Corporation, Tokyo 141-0001 (JP)
(72) Inventor: SUZUKI, Sadaka, SONY CORPORATION, Tokyo 141-0001 (JP); NOGUCHI, Kunihiko, SONY CORPORATION, Tokyo 141-0001 (JP)
(74) Representative: Mills, Julia
(86) International application number: PCT/JP2003/008186
(87) International publication number: WO 2004/003742

(57) **Abstract**

The present information relates to an information processing apparatus and method, a recording medium, and a program which are capable of easily and continuously writing programs to a plurality of storage blocks which are controlled by different CPUs. A first CPU 11 of an image display apparatus 1 writes a subject file from a semiconductor memory 2 to a specified device, a first flash ROM 12 or a first EEPROM 14. Alternatively, the first CPU 11 controls a second CPU 31 to write a subject file to a specified device, a second flash memory ROM 32 or a second EEPROM 34. While executing normal processing, the first CPU 11 confirms whether a subject file to be installed is ready or not. If the subject file is found to be ready, the first CPU 11 starts installing the subject file. The present invention is applicable to personal computers.

## Description

### Technical Field

The present invention relates generally to an information processing apparatus and method, a recording medium, and a program. More particularly, the present invention relates to an information processing apparatus and method, a recording medium, and a program which, in an information processing apparatus having two or more different CPUs and storage units, are capable of easily and continuously writing programs to the two or more storage units under the control of the different CPUs.

### Background Art

Technologies are known in which the programs and data for controlling video display apparatuses for example are recorded, before shipment from factory, to a ROM (Read Only Memory). Alternatively, the programs and data are recorded to or a RAM (Random Access Memory) or a hard disk drive so as to be updated later.

For example, if a trouble occurs in the programs or data written to any of these storage means before shipment from factor or new functions are added thereto, the new programs or data are read from a recording medium such as a flash memory card for example under the control of the CPU of each video display apparatus to be stored (or installed) at a predetermined address location in the storage block such as a RAM controlled by the CPU.

However, with video display apparatuses, it is a general practice that plural programs and data are stored in plural storage blocks to be processed by plural CPUs in different manners. Therefore, the above-mentioned related-art technologies involve a problem as follows. Because programs and data to be updated are stored (or installed) under the control of each corresponding CPU into a predetermined storage block which is controlled by that CPU, the update processing must be executed independently for each CPU. As a result, the plural programs and data corresponding to different CPUs disables to be updated continuously.

To be more specific, updating plural programs and data (or installing new programs and data) which correspond to different CPUs requires to make each corresponding CPU execute a write program, thereby executing read processing and write processing for each of the plural programs and data.

To circumvent the above-mentioned problem, a method is proposed in which a specially developed circuit or device for updating programs and data is used to execute a write (or installation) operation on plural storage blocks controlled by plural CPUs. However, since a writing (or installing) job is not frequently executed in general, this method unnecessarily increases the circuit scale, pushing up the cost and the power dissipation as well.

### Disclosure of Invention

It is therefore an object of the present invention to provide an information processing apparatus having plural CPUs and plural storage blocks which is capable of easily and continuously writing programs to these plural storage blocks under the control of these CPUs.

In carrying out the invention and according to one aspect thereof, there is provided an information processing apparatus including: first acquisition means for acquiring an instruction associated with the storage of the software to be supplied from the main control block; request means for requesting the main control block for the software; second acquisition means for acquiring the software supplied in response to the request by the request means; and storage control means for storing the software acquired by the second acquisition means by controlling the plurality of storage blocks.

The above-mentioned instruction includes information associated with the software and information associated with any of the plurality of storage blocks in which the software is stored.

The above-mentioned information processing apparatus further including: storage block setting means for selecting, from the plurality of storage blocks, one that is specified by the instruction acquired by the first acquisition means and setting the selected storage block as a storage block for storing the software acquired by the acquisition means; the storage control means storing the software into the storage block set by the storage block setting means.

The above-mentioned information processing apparatus still further including: confirmation means for confirming whether the software stored in the storage block under the control of the storage control means is normal or not; and supply means for supplying a confirmation result obtained by the confirmation means to the main control block.

In the above-mentioned information processing apparatus, if, on the basis of the confirmation result supplied from the supply means, the processing of storing the software into the storage block is found normally completed, the main control block controls a display block to display information indicative of the normal completion of the storage processing.

In the above-mentioned information processing apparatus, if, on the basis of the confirmation result supplied from the supply means, the processing of storing the software into the storage block is found not normally completed, the main control block controls a display block to display information indicative that an error has taken place in the storage processing.

In the above-mentioned information processing apparatus, the storage medium in which the software is stored is a removable memory card, and the main control block updates a program or data stored in the plurality of storage blocks by use of a program or data acquired from the memory card.

In the above-mentioned information processing apparatus, the storage control means compares version information of the software acquired by the second acquisition means with version information of software stored in the storage block and, if there is a mismatch, controls the storage block to store the software acquired by the second acquisition means.

In carrying out the invention and according to another aspect thereof, there is provided an information processing method including: a request step for requesting the main control block for the software; an acquisition control step for controlling the acquisition of the software supplied in response to a request by the request step; and a storage control step for storing the software of which acquisition is controlled by the acquisition control step, by controlling the plurality of storage blocks on the basis of an instruction supplied from the main control block.

In carrying out the invention and according to still another aspect thereof, there is provided a program of a recording medium including: a request step for requesting the main control block for the software; an acquisition control step for controlling the acquisition of the software supplied in response to a request by the request step; and a storage control step for storing the software of which acquisition is controlled by the acquisition control step, by controlling the plurality of storage blocks on the basis of an instruction supplied from the main control block.

In carrying out the invention and according to yet another aspect thereof, there is provided a program executable by a computer, the program including: a request step for requesting the main control block for the software; an acquisition control step for controlling the acquisition of the software supplied in response to a request by the request step; and a storage control step for storing the software of which acquisition is controlled by the acquisition control step, by controlling the plurality of storage blocks on the basis of an instruction supplied from the main control block.

In the information processing apparatus and method, recording medium, and program according to the present invention, an instruction associated with the storage of software supplied from the main control block is acquired, the software supplied in response to a request to the main control block is acquired, and the acquired software is stored in the storage block.

The information processing apparatus may be a microcomputer incorporated in digital cameras, mobile phones, television receivers, and other devices having a plurality of control blocks and a plurality of storage blocks.

### Brief Description of Drawings

FIG. 1 is a block diagram illustrating an exemplary configuration of an image display apparatus to which the present invention is applied;
FIG. 2 shows an exemplary configuration of storage areas of a first flash ROM shown in FIG. 1;
FIG. 3 shows an exemplary detail configuration of an ID information area shown in FIG. 2;
FIG. 4 shows an exemplary configuration of a semiconductor memory storage area;
FIG. 5 shows a relationship of programs stored in the storage areas of the first flash ROM shown in FIG. 2;
FIG. 6 is a flowchart indicative of boot processing by a first CPU shown in FIG. 1;
FIG. 7 is a flowchart indicative of the details of ID information confirmation processing to be executed in step S3 shown in FIG. 6;
FIG. 8 is a flowchart indicative of upgrade processing by the first CPU shown in FIG. 1;
FIG. 9 is a flowchart continued from the flowchart shown in FIG. 8 indicative of upgrade processing by the first CPU shown in FIG. 1;
FIG. 10 shows an exemplary GUI screen to be displayed when a memory card is loaded;
FIG. 11 shows an exemplary GUI screen to be displayed when a memory card is not loaded;
FIG. 12 shows an exemplary GUI screen to be displayed at completion;
FIG. 13 shows an exemplary GUI screen to be displayed at occurrence of an error;
FIG. 14 is a flowchart indicative of the details of rewrite processing to be executed in step S63 shown in FIG. 9;
FIG. 15 is a flowcharted continued from the flowchart shown in FIG. 14 indicative of the details of rewrite processing to be executed in step S63 shown in FIG. 9;
FIG. 16 is a flowchart indicative of write processing by a second CPU shown in FIG. 1;
FIG. 17 is a flowchart indicative of the processing of user program execution by the first CPU shown in FIG. 1;
FIG. 18 shows an exemplary screen which is displayed on the display block shown in FIG. 1;
FIG. 19 is a block diagram illustrating an exemplary configuration of a personal computer to which the present invention is applied; and
FIG. 20 is a schematic diagram illustrating an information processing system to which the present invention is applied.

### Best Mode for Carrying out the Invention

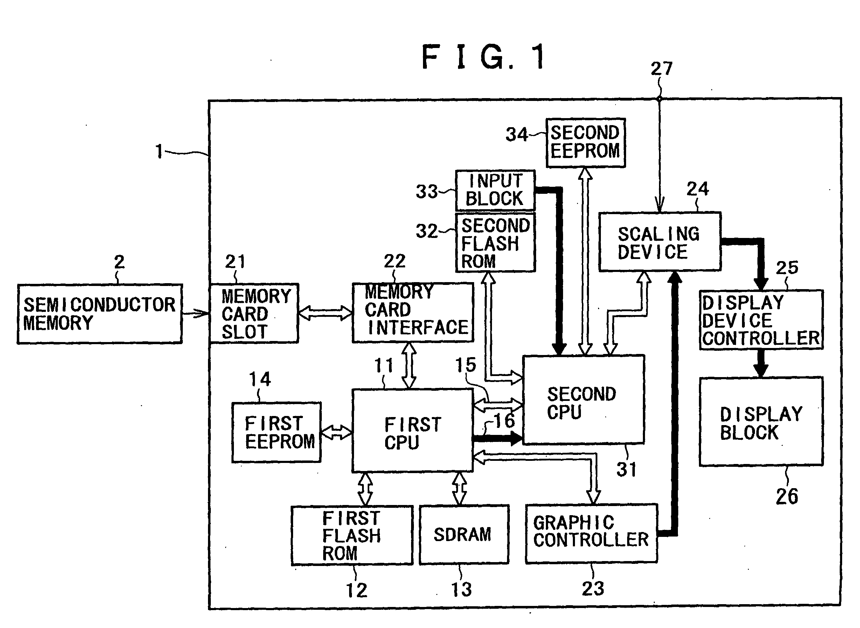

Now, referring to FIG. 1, there is shown an exemplary configuration of an image display apparatus according to the invention.

In FIG. 1, an image display apparatus 1 displays moving images and still images encoded by JPEG (Joint Photographic Experts Group) onto a display device as follows. The image display apparatus 1 processes the image data such as JPEG image data supplied through an input terminal or stored in a semiconductor memory 2 constituted by an electrically rewritable non-volatile memory such as a flash memory.

A first CPU (Central Processing Unit) 11 of the image display apparatus 1 executes image processing such as decoding on the image data captured from the semiconductor memory 2 through a memory card interface 22 and supplies the processed image data to a graphic controller 23.

Also, the first CPU 11 controls the component blocks interconnected through a bus. In addition, the first CPU 11 generates GUI (Graphical User Interface) information and supplies the information to the graphic controller 23.

The first CPU 11 is connected to a second CPU 31 via a communication bus 15 and a control bus 16 to transfer control information of various data.

The first CPU 11 loads programs stored in a first flash ROM (Read Only Memory) 12 and data stored in a first EEPROM (Electrically Erasable and Programmable Read Only Memory) 14 into an SDRAM (Synchronous Dynamic Random Access Memory) 13 and executes image processing and control processing on the basis of the loaded programs and data. The first CPU 11 is interconnected to the first flash ROM 12, the first EEPROM 14, and the SDRAM 13 through a bus.

It should be noted that the first CPU 11 can update the programs and data stored in the first flash ROM 12 and the first EEPROM 14 by use of the programs and data obtained from the semiconductor memory 2 via the memory card interface 22.

The first flash ROM 12 is an electrically rewritable non-volatile memory and stores programs which are executed by the first CPU 11.

The SDRAM 13, under the control of the first CPU 11, temporarily holds programs stored in the first flash ROM 12 and the data stored in the first EEPROM 14.

The first EEPROM 14 is an electrically rewritable non-volatile memory and stores data such as corrected values necessary for the image processing by the first CPU 11.

The image display apparatus 1 also has a memory card slot 21 through which the semiconductor memory 2 is loaded. The semiconductor memory 2 properly loaded in the memory card slot 21 is electrically connected to the memory card interface 22 to be controlled by the memory card interface 22.

The memory card interface 22, under the control of the first CPU 11, monitors the memory card slot 21 to check if the semiconductor memory 2 is properly loaded in the memory card slot 21, reads the data from the semiconductor memory 2, and supplies the data to the first CPU 11.

The graphic controller 23 generates the image data corresponding to an image to be displayed on a display block 26 by use of the image data and GUI information supplied from the first CPU 11, and supplies the generated image data to a scaling device 24.

The scaling device 24, under the control of the second CPU 31, executes resolution conversion processing for example on the image data supplied from the graphic controller 23 or the image data supplied from the outside of the image display apparatus 1 via an external image signal input terminal 27. Then, the scaling device 24 generates image data which are displayable on the display block 26 and supplies the generated image data to a display device controller 25.

The display device controller 25 supplies the image data supplied from the scaling device 24 to the display block 26 and controls the display block 26 to display images corresponding to the supplied image data.

The display block 26 is composed of a display device such as LCD (Liquid Crystal Display) or CRT (Cathode Ray Tube) for example. The display block 26 displays, under the control of the display device controller 25, images corresponding to the supplied image data.

The second CPU 31 controls the scaling device 24 by use of programs stored in the second flash ROM 32 and such data associated with image processing as brightness and hue stored in the second EEPROM 34. Thus, the second CPU 31 executes control operations associated with the displaying of images.

The second CPU 31 also executes various processing operations on the basis of user instructions entered through an input block 33.

Further, the second CPU 31 contains a ROM, not shown, and stores a boot-dedicated program. As described later, the second CPU 31 executes the boot-dedicated program to update the information stored in the second flash ROM 32 and the second EEPROM 34.

Like the first flash ROM 12, a second flash ROM 32 is an electrically rewritable non-volatile memory and stores programs which are executed by the second CPU 31.

The input block 33 is composed of channel buttons, menu operation buttons, and other controls, not shown, through which user instructions are entered to be supplied to the second CPU 31.

Like the first EEPROM 14, a second EEPROM 34 is an electrically rewritable non-volatile memory and stores the data necessary for the image processing by the second CPU 31.

The semiconductor memory 2 is a memory card constituted by an electrically rewritable non-volatile memory such as a flash memory typified by Memory Stick (trademark) for example.

The semiconductor memory 2 stores the programs to be stored in the first flash ROM 12 and the second flash memory ROM 32 and the data to be stored in the first EEPROM 14 and the second EEPROM 34, in addition to the JPEG image data for displaying corresponding images onto the display block 26 of the image display apparatus 1.

If the semiconductor memory 2 stores the programs and data to be stored in the first flash ROM 12 and the first EEPROM 14, the first CPU 11 gets these programs and data and writes them to the first flash ROM 12 and the first EEPROM 14, which will be described in detail later.

If the semiconductor memory 2 stores the programs and data to be stored in the second flash memory ROM 32 and the second EEPROM 34, the first CPU 11 supplies these programs and data to the second CPU 31 and controls the second CPU 31. Thus, the first CPU 11 writes these programs and data to the second flash memory ROM 32 and the second EEPROM 34, which will be described later.

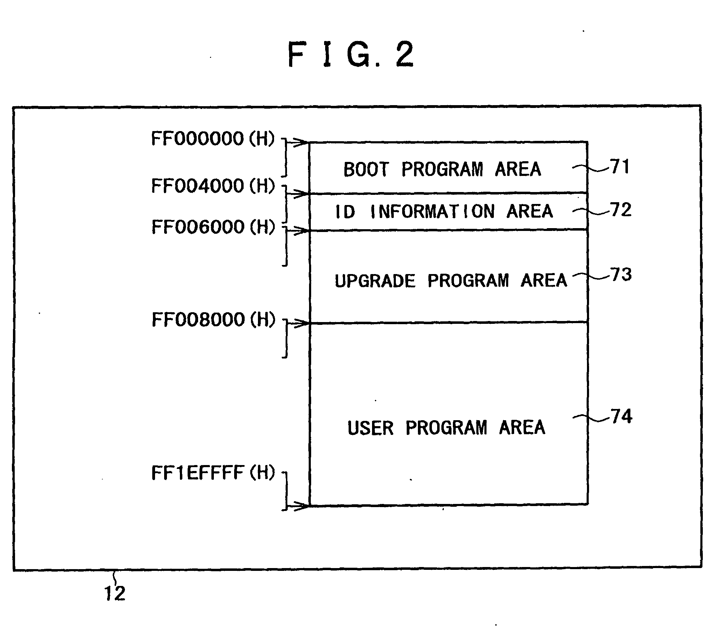

FIG. 2 shows an exemplary configuration of the storage areas in the first flash ROM 12 shown in FIG. 1.

In FIG. 2, when the image display apparatus 1 is powered on or the image display apparatus 1 is in the status equivalent thereto. That is to say, the image display apparatus 1 has been hardware-reset, the storage areas of the first flash ROM 12 are composed of a boot program area 71, an ID information area 72, an upgrade program area 73, and a user program area 74. The boot program area 71 stores the boot program to be executed by the first CPU 11. The ID information area 72 stores the ID information for specifying which of an upgrade program and a user program to be described later is to be executed. The upgrade program area 73 stores the upgrade program for upgrading the user program to be described later. The user program area 74 stores a program for executing the processing associated with the displaying of JPEG image data.

Referring to FIG. 1 again, the first flash ROM 12 and the SDRAM 13 are allocated with different address areas, such as "FF000000(H)" and "00000000(H)", in a memory space managed by the first CPU 11.

For example, as shown in FIG. 2, if address areas "FF000000(H)" through FF1EFFFF(H)" are allocated to the first flash ROM 12, execution of a hardware reset operation sets the value of a program counter of the first CPU 11 to "FF000000(H)". Then, the first CPU 11 executes the boot program stored in the boot program area 71.

In the example shown in FIG. 2, the boot program area 71 is allocated with an address area "FF000000(H)" through "FF003FFF(H)". The boot program stored in the boot program area 71 references the ID information stored in the ID information area, specifies either the upgrade program stored in the upgrade program area 73 or the user program stored in the user program area 74 on the basis of the ID information, and makes the first CPU 11 execute the specified program (or execute a software reset operation).

The ID information area 72 is allocated with an address area "FF004000(H)" through "FF005FFF(H)" and stores the information about the selection of the upgrade program stored in the upgrade program area 73 or the user program stored in the user program area 74, which will be described later in detail.

The upgrade program area 73 is allocated with an address area "FF006000(H)" through "FF007FFF(H)" and the upgrade program stored therein is executed by the first CPU 11, thereby upgrading the user program stored in the user program area 74 or the upgrade program itself.

The user program area 74 is allocated with an address area "FF008000(H)" through "FF1EFFF(H)", and the user program stored therein is executed by the first CPU 11 to execute the processing associated with the displaying of JPEG image data.

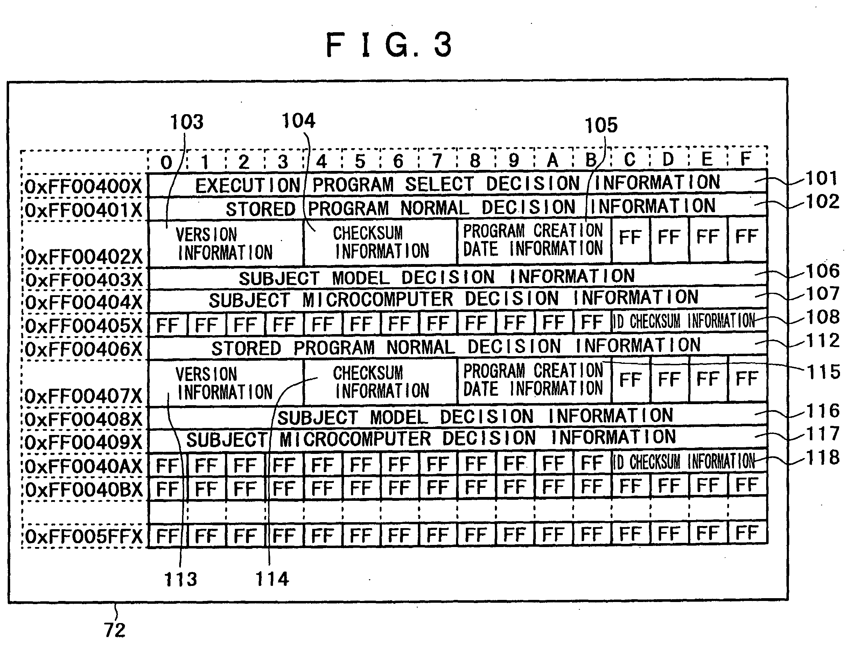

FIG. 3 shows a detail exemplary configuration of the ID information area 72 shown in FIG. 2.

Referring to FIG. 3, execution program select decision information 101 stored in the ID information area 72 is constituted by 16-byte data. This information includes information which allows the first CPU 11, which executes the boot program stored in the boot program area 71, to select one of the upgrade program stored in the upgrade program area 73 and the user program stored in the user program area 74, as the program to be booted.

To be more specific, the first CPU 11, which executes the boot program stored in the boot program area 71, selectively executes one of the upgrade program or the user program on the basis of the execution program select decision information 101 (namely, executes a software reset operation).

Stored program normal decision information 102, constituted by 16-byte data, includes information for determining whether the upgrade program area 73 stores software of different types.

That is to say, the first CPU 11 determines on the basis of the stored program normal decision information 102 whether upgrade program area 73 shown in FIG. 2 stores any program and data that cannot be executed as an upgrade program.

Version information 103, constituted by 4-byte data, includes the version information of the upgrade program stored in the upgrade program area 73 shown in FIG. 2.

Checksum information 104, constituted by 4-byte data, includes the information for determining whether the data of the upgrade program stored in the upgrade program area 73 shown in FIG. 2 are normal or not.

Program creation date information 105, constituted by 4-byte data, includes the information associated with the creation date of the upgrade program stored in the upgrade program area 73 shown in FIG. 2.

Subject model decision information 106 and subject microcomputer decision information 107, each constituted by 16-byte data, include the information for determining whether the upgrade program area 73 stores software of different types, as with the stored program normal decision information 102.

ID checksum information 108, constituted by 4-byte data, includes the information for checking if any information associated with the upgrade program area 73, including the above-mentioned stored program normal decision information 102 through subject microcomputer decision information 107, has been destroyed for some reason.

For example, in the example shown in FIG. 3, the ID checksum information 108 is stored at addresses "FF00405C(H)" through "FF00405F(H)" and includes the information for checking if the information stored in the area "FF004010(H)" through "FF00405B(H) is normal or not.

Stored program normal decision information 112, constituted by 16-byte data, includes the information for determining whether the user program area 74 shown in FIG. 2 stores software of different types.

That is to say, on the basis of the stored program normal decision information 112, the first CPU 11 determines whether the user program area 74 shown in FIG. 2 stores any program and data that cannot be executed as a user program.

Version information 113, constituted by 4-byte data, includes the version information of the user program stored in the user program area 74 shown in FIG. 2.

Checksum information 114, constituted by 4-byte data, includes the information for determining whether the data of the user program stored in the user program area 74 shown in FIG. 2 are normal or not.

Program creation date information 115, constituted by 4-byte data, includes the information associated with the creation date of the user program stored in the user program area 74 shown in FIG. 2.

Subject model decision information 116 and subject microcomputer decision information 117, each constituted by 16-byte data, include the information for determining whether the user program area 74 shown in FIG. 2 stores software of different types, as with the stored program normal decision information 112.

ID checksum information 118, constituted by 4-byte data, includes the information for checking if any information associated with the user program area 74, including the above-mentioned stored program normal decision information 112 through subject microcomputer decision information 117, has been destroyed for some reason.

For example, in the example shown in FIG. 3, the ID checksum information 118 is stored at addresses "FF0040AC(H)" through "FF0040AF(H)" and includes the information for checking if the information stored in the area "FF004060(H)" through "FF0040AB(H) is normal or not.

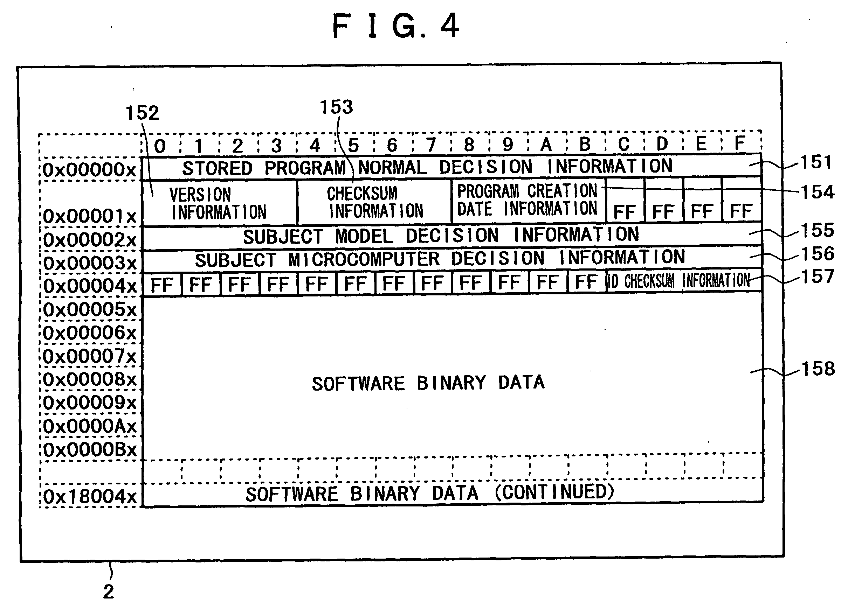

FIG. 4 shows an exemplary configuration of the storage area in the semiconductor memory 2.

In FIG. 4, stored program normal decision information 151 stored in the storage area of the semiconductor memory 2, constituted by 16-byte data, includes the information for determining whether this storage area stores software of different types.

That is to say, the first CPU 11 determines on the basis of the stored program normal decision information 112 whether the storage area of the semiconductor memory 2 stores any program and data that cannot be executed and processed on the image display apparatus 1.

Version information 152, constituted by 4-byte data, includes the information about the software stored in the storage area of the semiconductor memory 2.

Checksum information 153, constituted by 4-byte data, includes the information for determining whether the software stored in the storage area of the semiconductor memory 2 has been destroyed for some reason.

Program creation date information 154, constituted by 4-byte data, includes the information associated with the creation date of the software stored in the storage area of the semiconductor memory 2.

Subject model decision information 155 and subject microcomputer decision information 156, each constituted by 16-byte data, include the information for determining whether the storage area of the semiconductor memory 2 stores the software of different types, as with the stored program normal decision information 102.

ID checksum information 157, constituted by 4-byte data, includes the information for checking if any information associated with the software in the storage area of the semiconductor memory 2, including the above-mentioned stored program normal decision information 151 through subject microcomputer decision information 156, has been destroyed for some reason.

Software binary data 158 are the programs and data which are stored in the storage area of the semiconductor memory 2 and written to (or installed on) the image display apparatus 1.

The following describes a method of writing (or installing) programs and data in the image display apparatus 1 configured as described above.

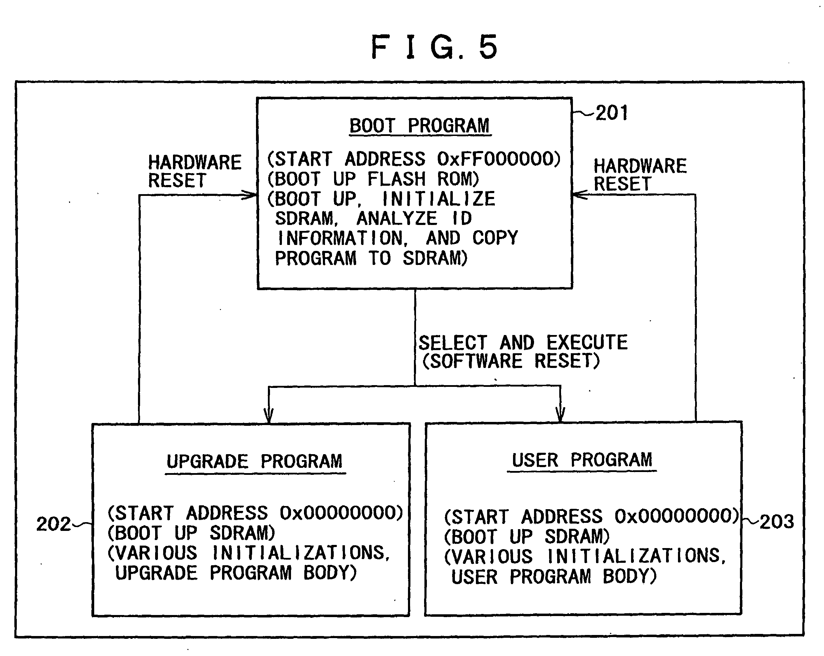

FIG. 5 shows an exemplary relationship of programs stored in the storage area of the first flash ROM 12 shown in FIG. 2.

As shown in FIG. 5, a boot program 201 is stored in the boot program area 71 shown in FIG. 2, an upgrade program 202 is stored in the upgrade program area 73 shown in FIG. 2, and a user program 203 is stored in the user program area 74 shown in FIG. 2.

When the image display apparatus 1 is hardware-reset by powering it on for example, the first CPU 11 executes the boot program 201 stored in the boot program area 71 of the first flash ROM 12.

Having executing the boot program 201, the first CPU 11 executes boot processing to be described late. On the basis of the contents of the execution program select decision information 101 in the ID information area 72 shown in FIG. 3, the first CPU 11 selects one of the upgrade program 202 and the user program 203 and copies the selected program to the SDRAM 13 for execution (namely, for software reset).

Having executed the upgrade program 202, the first CPU 11 executes upgrade processing to be described later, thereby writing (or installing) the software stored in the semiconductor memory 2 to a predetermined location. Then, when this processing has been completed, the first CPU 11 executes a hardware-reset operation, making it ready for the execution of the boot program 201. In doing so, the first CPU 11 updates the execution program select decision information 101 in the ID information area 72 to select the user program 203.

Having executed the user program 203, the first CPU 11 controls the memory card interface 22 while executing the image processing corresponding to the program. The first CPU 11 monitors if the semiconductor memory 2 storing the program to be written has been loaded in the memory card slot 21. If the semiconductor memory 2 is found loaded, the first CPU 11 executes a hardware-reset operation, making it ready for the execution of the boot program 201. In doing so, the first CPU 11 updates the execution program select decision information 101 in the ID information area 72, thereby selecting the upgrade program 202.

Thus, the first CPU 11 executes the boot program 201, the upgrade program 202, and the user program 203, thereby writing programs and data from the semiconductor memory 2.

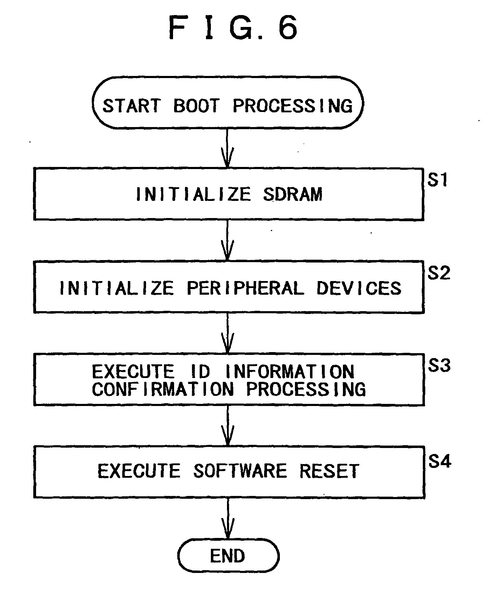

The following describes the boot processing by the first CPU 11 which has executed the boot program 201, with reference to the flowchart shown in FIG. 6.

First, in step S1, the first CPU 11 initializes the SDRAM 13 by setting the internal registers to control the SDRAM 13 such that data can be recorded thereto.

In step S2, the first CPU 11 initializes peripheral devices such as the first flash ROM 12, the first EEPROM 14, the memory card interface 22, and the graphic controller 23 which are connected to the first CPU 11 by setting their internal registers.

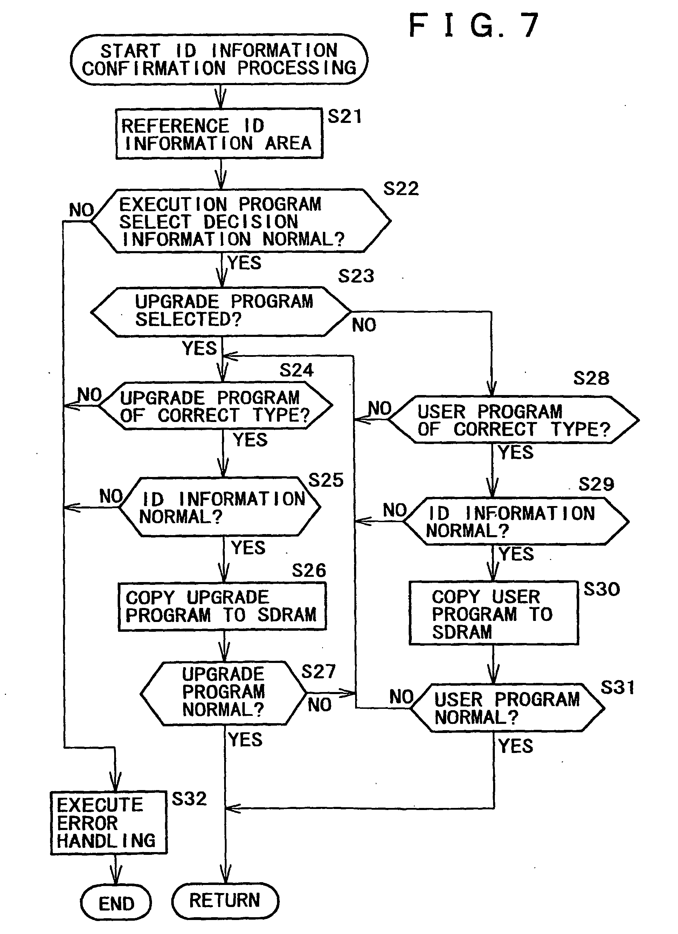

Having initialized the peripheral devices, the first CPU 11 executes, in step S3, ID information confirmation processing for making sure of the ID information stored in the ID information area 72 of the first flash ROM 12. Details of the ID information confirmation processing will be described later with reference to the flowchart shown in FIG. 7.

The first CPU 11 confirms either the upgrade program stored in the upgrade program area 73 of the first flash ROM 12 or the user program stored in the user program area 74 is to be selected for execution. In addition, the first CPU 11 copies the selected program to the SDRAM 13 by the ID information confirmation processing. In step S4, the first CPU 11 executes a software reset operation to execute the selected program, upon which the boot processing comes to an end.

Thus, having executed the hardware reset operation, the first CPU 11 copies the upgrade program or the user program to the SDRAM 13 and then executes a software-reset operation to execute the copied program.

The following describes details of the ID information confirmation processing which is executed in step S3 shown in FIG. 6 with reference to the flowchart shown in FIG. 7.

First, in step S21, the first CPU 11 references the ID information storage area 72 of the first flash ROM 12.

In step S22, the first CPU 11 determines whether the execution program select decision information 101 in the ID information area 72 is normal or not. If the execution program select decision information 101 specifies the upgrade program stored in the upgrade program area 73 or the user program stored in the user program area 74 and the execution program select decision information 101 is found to be normal, then the first CPU 11 goes to step S23. On the basis of the execution program select decision information 101, the first CPT 11 determines whether the upgrade program has been selected as the program to be executed.

If the execution program select decision information 101 specifies the upgrade program and the upgrade program is found selected as the program to be executed, then the first CPU 11 goes to step S24. On the basis of the stored program normal decision information 102 in the ID information area 72, the first CPU 11 determines whether the selected upgrade program is of a correct type.

If the selected upgrade program is found to be of a correct type, then the first CPU 11 goes to step S25. On the basis of the ID checksum information 108, the first CPU 11 determines whether the ID information corresponding to the selected upgrade program configured by the stored program normal decision information 102 through the subject microcomputer decision information 107 in the ID information area 72 is normal or not.

If the ID information corresponding to the selected upgrade program is found to be normal, then the first CPU 11 copies the upgrade program from the upgrade program area 73 of the first flash ROM 12 to the SDRAM 13 in step S26.

Having copied the upgrade program to the SDRAM 13, the first CPU 11 determines in step S27, on the basis of the checksum information 104 in the ID information storage area 72, whether the copied upgrade program is normal or not.

If the copied upgrade program is found destroyed for some reason and therefore not normal, then the first CPU 11 returns to step S24 to repeat the above-mentioned processing therefrom.

On the other hand, if the copied upgrade program is found to be normal, then the first CPU 11 ends the ID information confirmation processing, going to step S4 shown in FIG. 6.

If the user program is selected by the execution program select decision information 101 in step S23 and the upgrade program is not selected, then the first CPU 11 goes to step S28.

In step S28, the first CPU 11 determines on the basis of the stored program normal decision information 112 whether the selected user program is of a correct type.

If the selected user program is found to be of a correct type, then the first CPU 11 goes to step S29. The first CPU 11 determines, on the basis of the ID checksum information 118, whether the ID information corresponding to the selected user program configured by the stored program normal decision information 112 through the subject microcomputer decision information 117 in the ID information area 72 is normal or not.

If the ID information corresponding to the selected user program is found to be normal, then the first CPU 11 copies the user program from the user program area 74 of the first flash ROM 12 to the SDRAM 13 in step S30.

Having copied the selected user program to the SDRAM 13, the first CPU 11 determines in step S31, on the basis of the checksum information 114 in the ID information storage area 72, whether the copied user program is normal or not.

If the copied user program is found destroyed for some reason and therefore not normal, then the first CPU 11 returns to step S24 to repeat the above-mentioned processing therefrom.

That is to say, having failed the copying of the user program, the first CPU 11 next tries to copy the upgrade program to the SDRAM 13.

If the copied user program is found to be normal, then the first CPU 11 ends the ID information confirmation processing to go to step S4 shown in FIG. 6.

If the execution program select decision information 101 is found destroyed for some reason and therefore not normal in step S22, the first CPU 11 goes to step S32 to execute error handling, upon which the ID information confirmation processing comes to an end. In this case, the first CPU 11 skips the processing of step S4 shown in FIG. 6 to end the boot processing.

If the selected upgrade program is found to be not of a correct type in step 524, then the first CPU 11 goes to step S32 to execute error handling, upon which the ID information confirmation processing comes to an end. In this case, the first CPU 11 also skips the processing of step S4 shown in FIG. 6 to end the boot processing.

Further, if the ID information corresponding to the selected upgrade program is found to be not normal in step S25, the first CPU 11 goes to step S32 to execute error handling, upon which the ID information confirmation processing comes to an end. In this case, the first CPU 11 also skips the processing of step S4 shown in FIG. 6, upon which the boot processing comes to an end.

That is to say, if the first CPU 11 cannot execute the upgrade program and the user program, the first CPU 11 executes error handling to end the boot processing.

If the selected user program is found to be not of a correct type in step S28, then the first CPU 11 returns to step S24 to repeat the above-mentioned processing therefrom, as with the decision made in step S31 in which the copied user program is found to be not normal.

If the ID information corresponding to the selected user program is found to be not normal in step S29, the first CPU 11 also returns to step S24 to repeat the above-mentioned processing therefrom.

That is to say, having failed the copying of the user program, the first CPU 11 next tries the copying of the upgrade program to the SDRAM 13.

Thus, the first CPU 11 executes the ID information confirmation processing and, while checking the contents of the ID information area 72 in the first flash ROM 12, copies the upgrade program or the user program to the SDRAM 13.

As described above, the program copied to the SDRAM 13 is software-reset to be executed by the first CPU 11 in step S4 shown in FIG. 6.

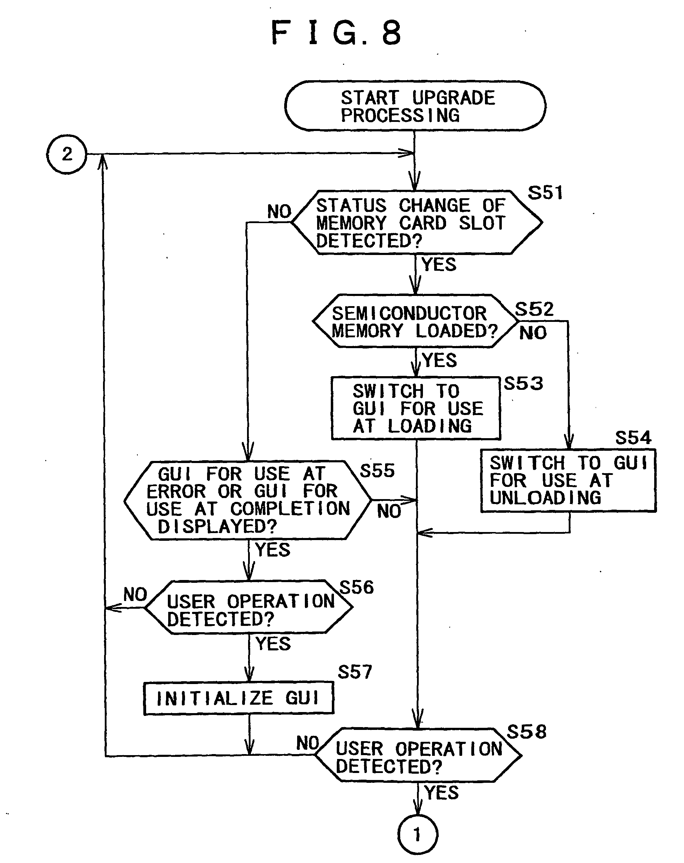

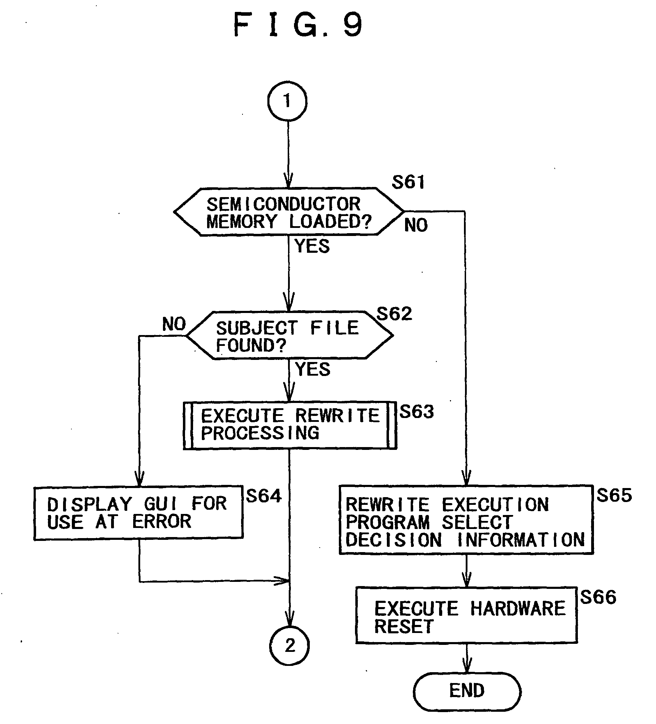

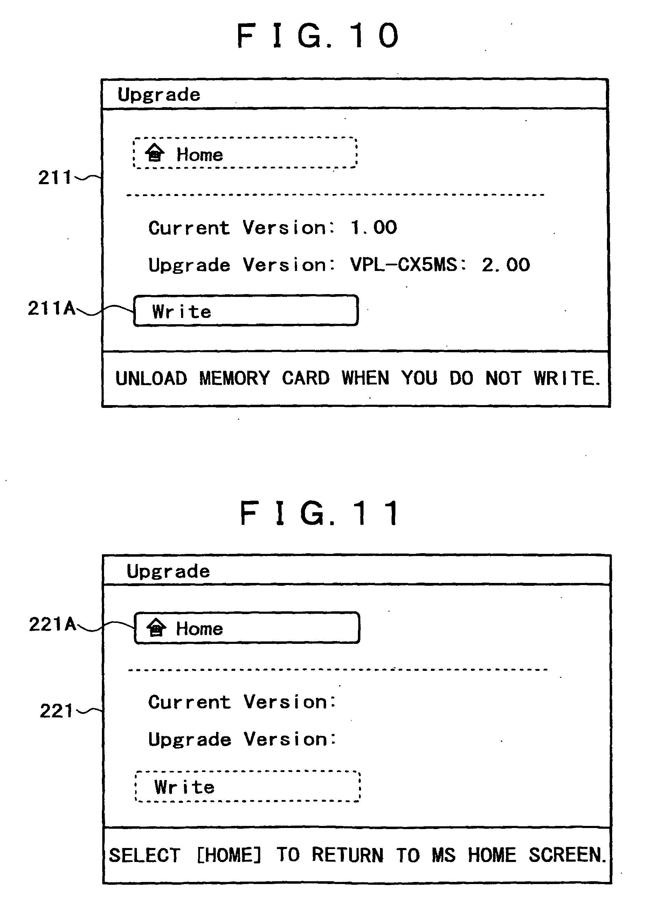

If the upgrade program has been executed as described above for example, the first CPU 11 executes upgrade processing. The following describes the upgrade processing to be executed by the first CPU 11 with reference to the flowchart shown in FIGS. 8 and 9. The description will be made also with reference to FIGS. 10 through 13 as required.

First, in step S51, the first CPU 11 controls the memory card interface 22 to monitor the status of the memory card slot 21, and determines whether a status change has been detected in the memory card slot 21.

For example, if a status change is detected in the memory card slot 21 by loading the semiconductor memory 2 therein, the memory card interface 22 supplies the information thereof to the first CPU 11. On the basis of the information supplied from the memory card interface 22, the first CPU 11 determines whether the memory card slot 21 has changed in its status.

If the memory card interface 22 is found detecting the status change of the memory card slot 21, then the first CPU 11 goes to step S52 to determine on the basis of the information thereof whether the semiconductor memory 2 is loaded in the memory card slot 21.

If the semiconductor memory 2 is found loaded in the memory card slot 21, then the first CPU 11 goes to step S53. The first CPU 11 generates a GUI for use at loading and supplies the generated GUI to the display block 26 via the graphic controller 23, the scaling device 24, and the display device controller 25. Thus, the display screen is switched to the GUI screen. Having received the GUI for use at loading, the display block 26 displays a GUI screen for use at loading as shown in FIG. 10 for example onto the display device under the control of the display device controller 25.

In a GUI screen 211 for use at loading shown in FIG. 10, "Write" button 211A is ready for operation (or active). The user can operate the button 211A through the input block 33 to give a command for starting a write operation (or an upgrade operation).

Referring to FIG. 8 again, after switching the display screen to the GUI for use at loading, the first CPU 11 goes to step S58.

If the semiconductor memory 2 is found not loaded in the memory card slot 21 in step S52, then the first CPU 11 goes to step S54. The first CPU 11 generates a GUI for use at unloading and supplies this GUI to the display block 26 via the graphic controller 23, the scaling device 24, and the display device controller 25. Thus, the display screen is switched to a GUI screen for use when the semiconductor memory 2 is not loaded. Having received this GUI, the display block 26 displays a GUI screen for use at unloading as shown in FIG. 11 for example onto the display device under the control of the display device controller 25.

In a GUI screen 221 for use at unloading shown in FIG. 11, "Home" button 221A is ready for operation (or active). The user can operate the button 221A through the input block 33 to give a command for stopping the write-associated processing, thereby displaying "Home" screen which is a GUI screen for displaying a predetermined basic menu to let the user select other processing.

Referring to FIG. 8 again, after switching the display screen to the GUI for use at unloading, the first CPU 11 goes to step S58.

If the information about the status of the memory card slot 21 has not been supplied from the memory card interface 22 and therefore a status change in the memory card slot 21 has not been detected by the memory card interface 22 in step S51, then the first CPU 11 goes to step S55.

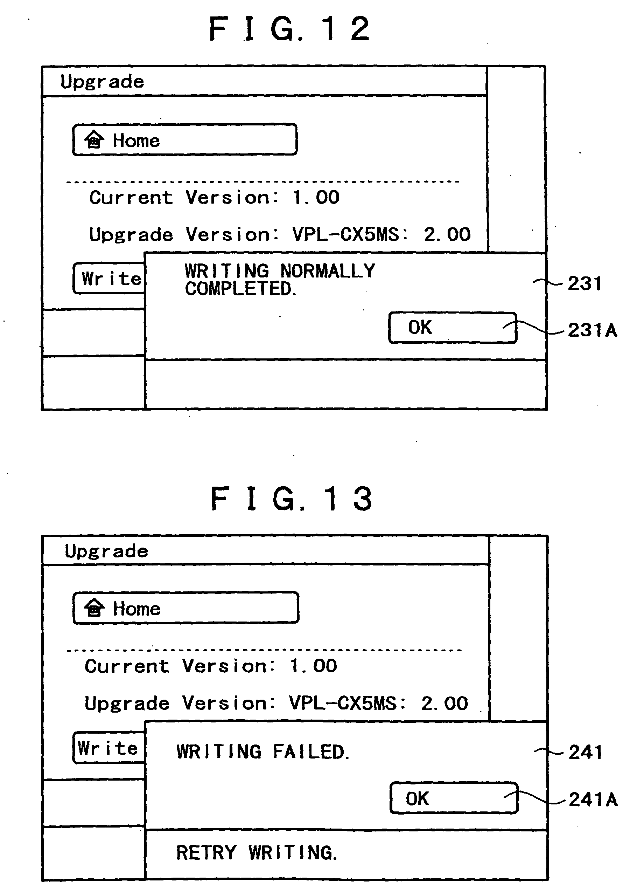

In step S55, the first CPU 11 determines whether the display block 26 is displaying a GUI for use at error or a GUI for use at completion. If the write operation (or the upgrade operation) has been normally completed, the first CPU 11 generates a GUI for use at completion and supplies it to the display block 26 via the graphic controller 23, the scaling device 24, and the display device controller 25. Having received the GUI for use at completion, the display block 26 displays a GUI screen for use at completion as shown in FIG. 12 for example onto the display device under the control of the display device controller 25.

In a GUI 231 screen for use at completion shown in FIG. 12, "OK" button 231A is ready for operation (or active). The user can operate the button 231A through the input block 33 to check if the write operation has been completed.

If an error is encountered in a write operation (or an upgrade operation), the first CPU 11 generates a GUI for use at error and supplies it to the display block 26 via the graphic controller 23, the scaling device 24, and display device controller 25. Having received the GUI for use at error, the display block 26 displays a GUI screen for use at error as shown in FIG. 13 for example onto the display device under the control of the display device controller 25.

In a GUI screen 241 for use at error shown in FIG. 13, "OK" button 241A is ready for operation (or active). The user can operate the button 241A through the input block 33 to check if an error has occurred in the write operation.

Referring to FIG. 8 again, the first CPU 11 determines whether the display block 26 is displaying the above-mentioned GUI for use at error or GUI for use at completion in step S55. If none of these GUI screens is found displayed, then the first CPU 11 goes to step S58.

If the above-mentioned GUI for use at error or GUI for use at completion is found displayed on the display block 26, then the first CPU 11 goes to step S56.

In step S56, the first CPU 11 controls the second CPU 31 to monitor the input block 33, thereby determining whether a user operation has been detected. The first CPU 11 makes, via the communication bus 15, the second CPU 31 execute the processing of monitoring the input block 33. The second CPU 31 monitors the input block 33 to detect whether the user has operated the input block 33 and informs the information thereof to the first CPU 11 via the communication bus 15. On the basis of the supplied information, the first CPU 11 determines whether a user operation has been made.

If the user has not operated the input block 33 and therefore no user operation has been detected, then the first CPU 11 returns to step S51 to repeat the above-mentioned processing therefrom.

If a user operation is found detected, then the first CPU 11 goes to step S57 to delete the GUI for use at error or the GUI for use at completion displayed in the display block 26, thereby executing GUI initialization. Having initialized the GUI, the first CPU 11 returns to step S51 to repeat the above-mentioned processing therefrom.

That is to say, if the GUI screen 231 for use at error or-the GUI screen 241 for use at completion is displayed on the display block 26, the first CPU 11 repeats the processing of steps S51, S55, and S56 until the user operates the button 231A or the button 241A through the input block 33.

When the user operates the button 231A or the button 241A through the input block 33, the first CPU 11 deletes the GUI screen 231 for use at completion or the GUI screen 241 for use at error displayed on the display block 26.

As described above, if the display screen on the display block 26 is switched to the GUI screen 211 for use at loading in step S53, the display screen on the display block 26 is switched to the GUI screen 221 for use at unloading in step S54, or the GUI screen 231 for use at completion or the GUI screen 241 for use at error is found not displayed on the display block 26 in step S55, then the first CPU 11 goes to step S58.

In step S58, the first CPU 11 controls the second CPU 31 as with step S56 to monitor the input block 33, and determines whether a user operation has been detected.

If the user is found not having operated the input block 33 and therefore no user operation is found performed, then the first CPU 11 returns to step S51 to repeat the above-mentioned processing therefrom.

If the user has operated the input block 33 and therefore a user operation is detected, then the first CPU 11 goes to step S61 shown in FIG. 9 to control the memory card interface 22 as with step S52, thereby determining whether the semiconductor memory 2 is loaded in the memory card slot 21.

If the semiconductor memory 2 is found loaded, then the first CPU 11 goes to step S62 to determine whether the subject file to write to the image display apparatus 1 is stored in the storage area of the loaded semiconductor memory 2.

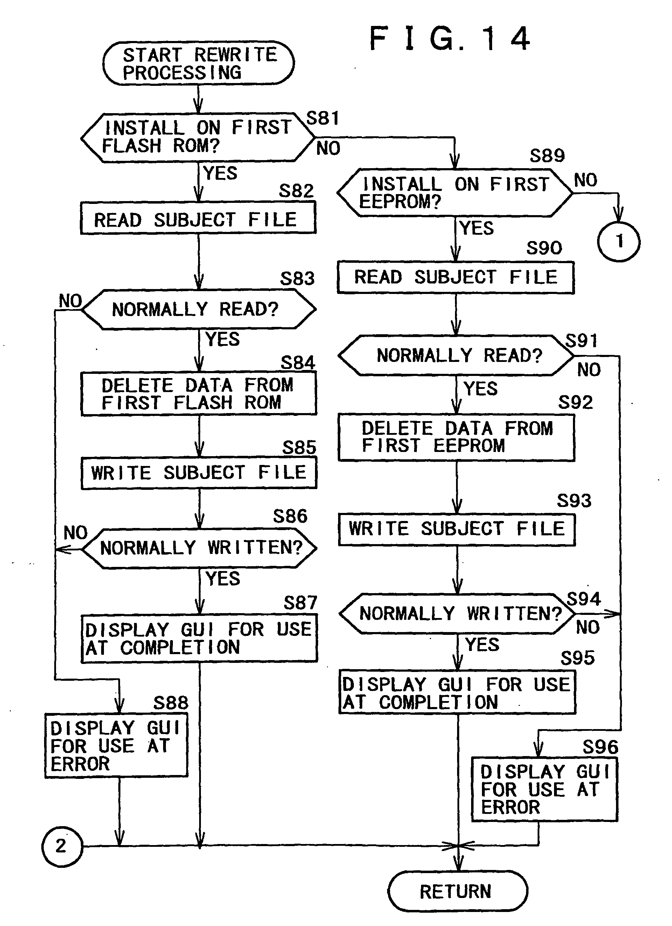

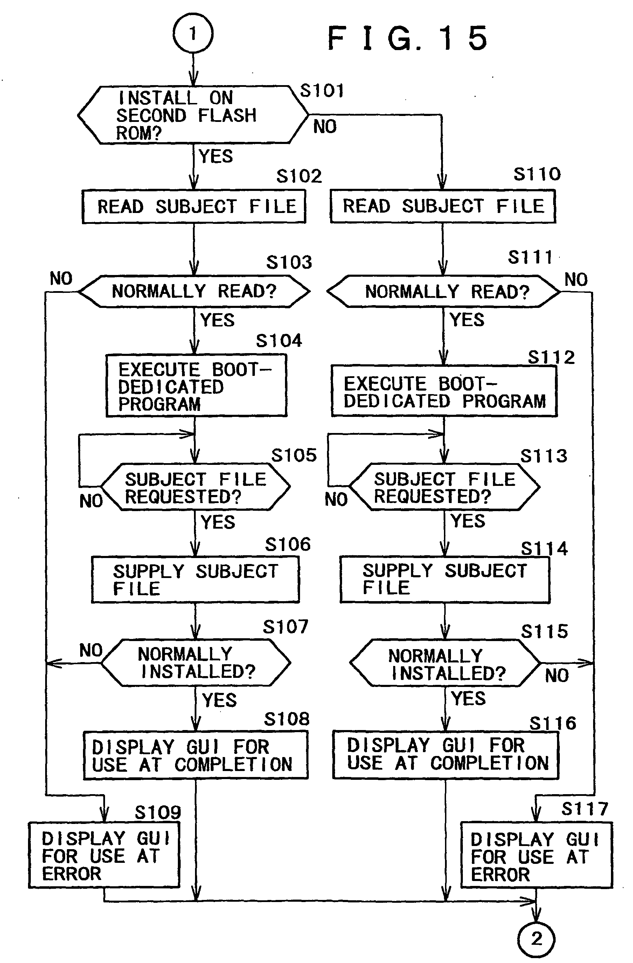

If the software binary data and ID information are found recorded to the storage area of the semiconductor memory 2 as shown in FIG. 4 and therefore the subject file is found stored, then the first CPU 11 executes rewrite processing in step S63. This rewrite processing will be detailed later with reference to the flowcharts shown in FIGS. 14 and 15.

Next, having completed the rewrite processing, the first CPU 11 returns to step S51 to repeat the above-mentioned processing therefrom.

If the software binary data and the ID information are found not stored in the storage area of the semiconductor memory 2 in step S62 and therefore the subject file is found not stored, then the first CPU 11 goes to step S64. Thus, the first CPU 11 displays the GUI for use at error onto the display block 26.

Having displayed the GUI for use at error onto the display block 26, the first CPU 11 returns to step S51 to repeat the above-mentioned processing therefrom.

If the semiconductor memory 2 is found not loaded in the memory card slot 21 in step S61, the first CPU 11 goes to step S65 to rewrite the contents of the execution program select decision information 101 stored in the ID information area 72 of the first flash ROM 12, for the user program to be selectively executed.

Next, in step S66, the first CPU 11 executes a hardware-reset operation to end the upgrade processing.

After the execution of the upgrade program 202 shown in FIG. 5, the first CPU 11 executes the upgrade processing as described above to write (or install) the software from the storage area of the semiconductor memory 2 to the image display apparatus 1.

The following describes the details of the rewrite processing which is executed in step S63 shown in FIG. 9, with reference to the flowcharts shown in FIGS. 14 and 15.

First, in step S81, the first CPU 11 determines whether to install a subject file into the storage area of the first flash ROM 12.

Programs and data stored in the storage area of the first flash ROM 12 are written (or installed) to any one of the first flash ROM 12, the first EEPROM 14, the second flash memory ROM 32, and the second EEPROM 34 of the image display apparatus 1. The destination of the writing (or installation) is specified by subject model decision information 155 stored in the storage area of the semiconductor memory 2.

In step S81, on the basis of the subject model decision information 155, the first CPU 11 determines whether to install a program and data from the storage area of the semiconductor memory 2 into the first flash ROM 12.

If the subject file stored in the storage area of the semiconductor memory 2 is a program and it is to be installed in the first flash ROM 12, the first CPU 11 goes to step S82. The first CPU 11 controls the memory card interface 22 to read the subject file from the semiconductor memory 2 loaded in the memory card slot 21 and supplies the subject file to the SDRAM 13 in which to hold. It should be noted that the first CPU 11 specifies, an area for storing the subject file, an area which is different from the area in which the copied upgrade program is stored.

Next, in step S83, the first CPU 11 makes confirmation of the subject file held in the SDRAM 13 to determine whether the read operation has been normally performed.

If the subject file copied to the SDRAM 13 is found to be normal and the read operation is found normally performed, the first CPU 11 goes to step S84 to delete the data from the area specified as the storage destination in the storage area of the first flash ROM 12.

In step S85, on the basis of subject microcomputer decision information 156 for example shown in FIG. 4, the first CPU 11 writes (or installs) the subject file from the SDRAM 13 to a predetermined area in the first flash ROM 12.

Having written the subject file, the first CPU 11 goes to step S86 to determine on the basis of the checksum information 153 shown in FIG. 4 whether the writing (or installing) operation has normally performed.

If the writing (or installing) operation is found normally performed, the first CPU 11 goes to step S87 to generate the GUI for use at completion and supplies it to the display block 26 via the graphic controller 23, scaling device 24, and display device controller 25. Thus, the GUI screen 231 for use at completion shown in FIG. 12 is displayed on the display block 26.

Having displayed the GUI screen 231 for use at completion, the first CPU 11 ends the rewrite processing and returns to step S51 shown in FIG. 8.

If the subject file copied to the SDRAM 13 is found destroyed for some reason and therefore its reading is found performed not normally in step S83, the first CPU 11 goes to step S88.

If the writing of the subject file to the first flash ROM 12 is found performed not normally in step S86, the first CPU 11 also goes to step S88.

In step S88, the first CPU 11 generates the GUI for use at error and supplies it to the display block 26 via the graphic controller 23, the scaling device 24, and the display device controller 25. Thus, the GUI screen 241 for use at error shown in FIG. 13 is displayed on the display block 26.

Having displayed the GUI screen 241 for use at error, the first CPU 11 ends the rewrite processing and returns to step S51 shown in FIG. 8.

If a program and data stored in the storage area of the semiconductor memory 2 are determined not to be installed in the first flash ROM 12 in step S81, then the first CPU 11 goes to step S89 to determine on the basis of the subject model decision information 155 whether to install a program and data stored in the storage area of the semiconductor memory 2 into the first EEPROM 14.

If the software stored in the storage area of the semiconductor memory 2 is data and it is determined to install the data in the first EEPROM 14, then the first CPU 11 goes to step S90. The first CPU 11 controls the memory card interface 22, thereby reading the subject file from the semiconductor memory 2 loaded in the memory card slot 21, supplying the subject file to the SDRAM 13, and holding the subject file therein. At this moment, the first CPU 11 specifies an area which is different from the area in which the copied upgrade program is stored in the SDRAM 13, as an area in which the subject file is stored.

Next, in step S91, the first CPU 11 makes confirmation of the subject file stored in the SDRAM 13 to determine whether the read operation has normally performed.

If the subject file copied to the SDRAM 13 is found to be normal and therefore the read operation is found normally performed, then the first CPU 11 goes to step S92 to delete the data stored in the storage area specified as the storage destination of the subject file.

In step S93, the first CPU 11 writes (or installs) the subject file from the SDRAM 13 to the predetermined area in the first EEPROM 14 on the basis of the subject microcomputer decision information 156 for example shown in FIG. 4.

Writing the subject file, the first CPU 11 goes to step S94 to determine on the basis of the checksum information 153 shown in FIG. 4 whether the writing (or installing) operation has been normally performed.

If the writing (or installing) operation is found normally performed, then the first CPU 11 goes to step S95 to generate the GUI for use at completion and supplies it to the display block 26 via the graphic controller 23, the scaling device 24, and the display device controller 25. Thus, the GUI screen 231 for use at completion shown in FIG. 12 is displayed on the display block 26.

Having displayed the GUI screen 231 for use at completion, the first CPU 11 ends the rewrite processing and returns to step S51 shown in FIG. 8.

If the subject file copied to the SDRAM 13 is found destroyed for some reason and therefore the read operation is found performed not normally in step S91, then the first CPU 11 goes to step S96.

Further, if the writing of the subject file to the first flash ROM 12 is found performed not normally in step S94, the first CPU 11 also goes to step S96.

In step S96, the first CPU 11 generates the GUI for use at error and supplies it to the display block 26 via the graphic controller 23, the scaling device 24, and the display device controller 25, thereby displaying the GUI screen 241 for use at error shown in FIG. 13.

Having displayed the GUI screen 241 for use at error, the first CPU 11 ends the rewrite processing and returns to step S51 shown in FIG. 51.

If a program and data stored in the storage area of the semiconductor memory 2 are determined not to be installed in the first EEPROM 14 in step S89, then the first CPU 11 goes to step S101 shown in FIG. 15.

In step S101 shown in FIG. 15, the first CPU 11 determines on the basis of the subject model decision information 155 whether to install a program and data stored in the storage area of the semiconductor memory 2 into the second flash memory ROM 32, as with steps S81 and S89 shown in FIG. 14.

Next, if the software stored in the storage area of the semiconductor memory 2 is a program and it is determined to be installed in the second flash memory ROM 32, the first CPU 11 goes to step S102. The first CPU 11 controls the memory card interface 22, thereby reading the subject file from the semiconductor memory 2 loaded in the memory card slot 21, supplying the subject file to the SDRAM 13, and holding the subject file therein. At this moment, the first CPU 11 specifies an area which is different from the area in which the copied upgrade program is stored in the SDRAM 13, as an area in which the subject file is stored.

In step S103, the first CPU 11 makes confirmation of the subject file held in the SDRAM 13 and determines whether the read operation has normally performed.

If the subject file copied to the SDRAM 13 is found to be normal and therefore the read operations is found normally performed, then the first CPU 11 goes to step S104 to control the second CPU 31 to make it execute the boot-dedicated program stored in the incorporated ROM (not shown).

The first CPU 11 controls the second CPU 31 via the control bus 16 to make the second CPU 31 execute the boot-dedicated program and software-reset the second CPU 31 by installing the program in the second flash memory ROM 32.

The second CPU 31 that has been software-reset executes the boot-dedicated program, making the second flash memory ROM 32 ready for a write operation. When the second flash memory ROM 32 is made ready, the second CPU 31 requests the first CPU 11 for the subject file via the communication bus 15.

In step S105, the first CPU 11 determines whether the first CPU 11 has received the request for the subject file and waits until it is received.

If the request for the subject file is found received from the second CPU 31, the first CPU 11 goes to step S106 to supply the requested subject file to the second CPU 31 via the communication bus 15.

Receiving the subject file, the second CPU 31 writes (or installs) the received subject file to a predetermined address location in the second flash memory ROM 32. Then, the second CPU 31 references the subject file written to the second EEPROM 34 to determine whether the subject file has been normally installed and supplies the decision result to the first CPU 11 via the communication bus 15.

Receiving the decision result, the first CPU 11 determines on the basis of the decision result in step S107 whether the installation of the subject file has been normally performed.

If the installation into the second flash memory ROM 32 is found normally performed, then the first CPU 11 goes to step S108 to generate the GUI for use at completion and supplies it to the display block 26 via the graphic controller 23, the scaling device 24, and the display device controller 25, thereby displaying the GUI screen 231 for use at completion shown in FIG. 12.

Having displayed the GUI screen 231 for use at completion, the first CPU 11 ends the rewrite processing and returns to step S51 shown in FIG. 8.

If the installation of the subject file into the second flash memory ROM 32 is found not normally performed in step S107, then the first CPU 11 goes to step S109. The first CPU 11 generates the GUI for use at error and supplies it to the display block 26 via the graphic controller 23, the scaling device 24, and the display device controller 25, thereby displaying the GUI screen 241 for use at error shown in FIG. 13.

Having displayed the GUI screen 241 for use at error, the first CPU 11 ends the rewrite processing and returns to step S51 shown in FIG. 8.

If the subject file stored in the storage area of the semiconductor memory 2 is data and it is determined to install the data into the second EEPROM 34 but not into the second flash memory ROM 32 in step S101, then the first CPU 11 goes to step S110.

In step S110, in order to install the subject file into the second EEPROM 34, the first CPU 11 controls the memory card interface 22 to read the subject file from the semiconductor memory 2 loaded in the memory card slot 21, supplies it to the SDRAM 13, and holds it therein. At this moment, the first CPU 11 specifies an area which is different from the area in which the copied upgrade program is stored in the SDRAM 13, as an area in which the subject file is stored.

In step S111, the first CPU 11 makes confirmation of the subject file held in the SDRAM 13 to determine whether the read operation has been normally performed.

If the subject file copied to the SDRAM 13 is found to be normal and therefore the read operation is found normally performed, then the first CPU 11 goes to step S112 to control the second CPU 31 to make the second CPU 31 execute the boot-dedicated program stored in the incorporated ROM (not shown).

The first CPU 11 controls the second CPU 31 via the control bus 16 to make the second CPU 31 execute the boot-dedicated program and software-reset the second CPU 31 by installing the program in the second EEPROM 34.

The second CPU 31 that has been software-reset executes the boot-dedicated program, and makes the second EEPROM 34 ready for a write operation. When the second EEPROM 34 is made ready, the second CPU 31 requests the first CPU 11 for the subject file via the communication bus 15.

In step S113, the first CPU 11 determines whether the first CPU 11 has received the request for the subject file and waits until it is received.

If the request for the subject file is found received from the second CPU 31, the first CPU 11 goes to step S114 to supply the requested subject file to the second CPU 31 via the communication bus 15.

Receiving the subject file, the second CPU 31 writes (or installs) the received subject file to a predetermined address location in the second EEPROM 34. Then, the second CPU 31 references the subject file written to the second EEPROM 34 to determine whether the subject file has been normally installed and supplies the decision result to the first CPU 11 via the communication bus 15.

Receiving the decision result, the first CPU 11 determines on the basis of the decision result in step S115 whether the installation of the subject file has been normally performed.

If the installation into the second flash memory ROM 32 is found normally performed, then the first CPU 11 goes to step S116. The first CPU 11 generates the GUI for use at completion and supplies it to the display block 26 via the graphic controller 23, the scaling device 24, and the display device controller 25, thereby displaying the GUI screen 231 for use at completion shown in FIG. 12.

Having displayed the GUI screen 231 for use at completion, the first CPU 11 ends the rewrite processing and returns to step S51 shown in FIG. 8.

If the read operation is found not normally performed in step S111 and the supply of the subject file to the second CPU 31 is found not normally performed in step S115, then the first CPU 11 goes to step S117. The first CPU 11 generates the GUI for use at error and supplies it to the display block 26 via the graphic controller 23, the scaling device 24, and the display device controller 25, thereby displaying the GUI screen 241 for use at error shown in FIG. 13.

Having displayed the GUI screen 241 for use at error, the first CPU 11 ends the rewrite processing and returns to step S51 shown in FIG. 8.

Thus, the first CPU 11 executes the processing in accordance with the specified destination of installation to install each subject file. As described above, in the installation of each subject file into the second flash memory ROM 32 or the second EEPROM 34 corresponding to the second CPU 31, the first CPU 11 executes the processing by controlling the second CPU 31 via the control bus 16.

Consequently, the image display apparatus 1 can easily install the supplied programs two or more storage blocks under the control of two or more CPUs.

It should be noted that, because the first CPU 11 executes the upgrade program stored in the first flash ROM 12 after copying it to the SDRAM 13, if the subject file is the upgrade file itself, the subject file can be installed in the first flash ROM 12. At this moment, the first CPU 11 is executing the old upgrade program copied to the SDRAM 13. By software-resetting the first CPU 11, the first CPU 11 can execute the newly installed upgrade program.

As described above, if the installation destination of the subject file is the second flash memory ROM 32 or the second EEPROM 34 by the subject microcomputer decision information 156 shown in FIG. 4 in the rewrite processing by the first CPU 11, then the first CPU 11 controls the second CPU 31 via the control bus 16. The second CPU 31 executes the boot-dedicated program and software-reset by installing the program in the second flash memory ROM 32 or the second EEPROM 34.

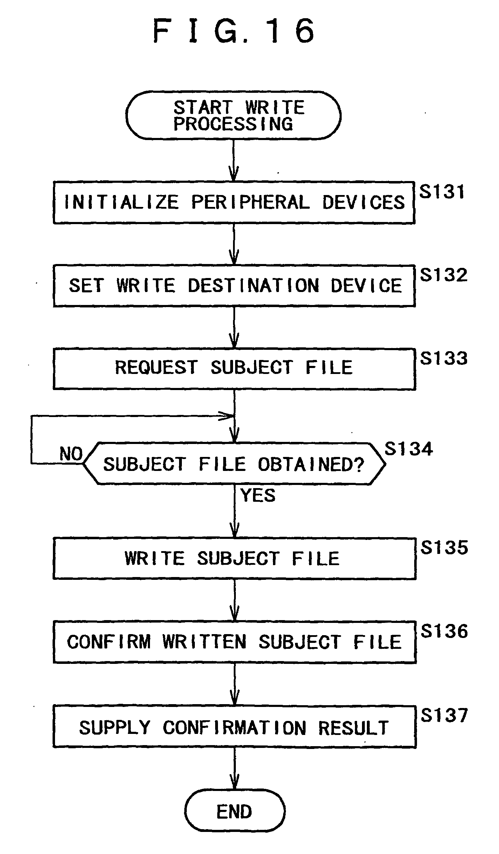

The second CPU 31 that has been software-reset executes the boot-dedicated program, and starts writing the subject file to the second flash memory ROM 32 or the second EEPROM 34. The following describes the write processing by the second CPU 31 with reference to the flowchart shown in FIG. 16.

First, in step S131, the second CPU 31 sets the internal registers of such peripheral devices connected to the second CPU 31 as the second flash memory ROM 32, the input block 33, the second EEPROM 34, and the scaling device 24 to initialize them.

In step S132, the second CPU 31 sets the subject file write destination device to the device specified by the first CPU 11, namely the second flash memory ROM 32 or the second EEPROM 34.

Having set the write destination device, the second CPU 31 requests the first CPU 11 for the subject file to be installed via the communication bus 15 in step S133. In response, the first CPU 11 detects the request in step S105 or S113 shown in FIG. 15 and supplies the requested subjected file to the second CPU 31 via the communication bus 15 in the processing of step S106 or step S114.

In step S134, the second CPU 31 determines whether the second CPU 31 has received the subject file from the first CPU 11 and waits until the subject file is received.

If the subject file is found received, the second CPU 31 goes to step S135 and writes (or installs) the received subject file to the write destination device set in step S132, namely the second flash memory ROM 32 or the second EEPROM 34.

Having written the subject file, the second CPU 31 confirms in step S136 whether the written subject file is normal or not. In step S137, the second CPU 31 supplies the confirmation result to the first CPU 11 via the communication bus 15, thereby ending the write processing.

Thus, the second CPU 31 is software-reset by the first CPU 11 to execute the write processing.

Consequently, the image display apparatus 1 can easily install the supplied programs into two or more storage blocks under the control of two or more CPUs.

When the upgrade program 202 is executed by the first CPU 11 and the first CPU 11 is hardware-reset in step S66 shown in FIG. 9, the first CPU 11 executes the boot program 201 as shown in FIG. 5.

In step S65 shown in FIG. 9, the execution program select decision information 101 stored in the ID information area 72 of the first flash ROM 12 is set by the first CPU 11 so as to select the user program. Therefore, the first CPU 11 that has executed the boot program 201 copies the user program 203 from the user program area 74 of the first flash ROM 12 to the SDRAM 13 in step S30 shown in FIG. 7. In addition, the first CPU 11 executes a software-reset operation in step S4 shown in FIG. 6, thereby executing the user program 203 copied to the SDRAM 13.

The first CPU 11 which executes the user program controls the memory card interface 22 while executing the predetermined processing associated with image processing, thereby monitoring the status change of the memory card slot 21.

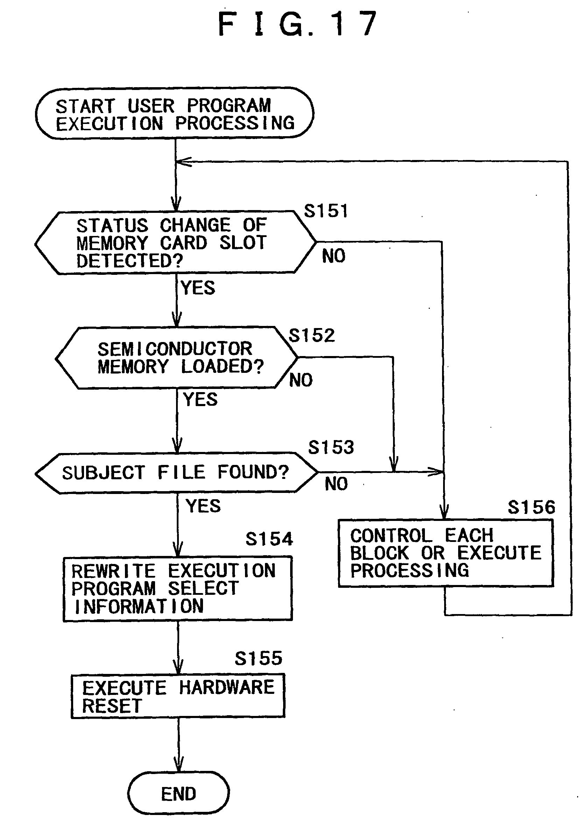

The following describes the user program execution processing by the first CPU 11 with reference to the flowchart shown in FIG. 17.

First, in step S151, the first CPU 11 controls the memory card interface 22 to monitor the memory card slot 21, and determines whether a status change of the memory card slot 21 has been detected or not, as with step S51 shown in FIG. 8.

If the memory card interface 22 has detected the status change of the memory card slot 21, the first CPU 11 goes to step S152 to determine on the basis of the information thereof whether the semiconductor memory 2 is loaded in the memory card slot 21, as with step S52.

If the semiconductor memory 2 is found loaded in the memory card slot 21, the first CPU 11 goes to step S153 to determine whether the subject file to be written to the image display apparatus 1 exists in the storage area of the loaded semiconductor memory 2, as with step S62 shown in FIG. 9.

If the subject file is found, the first CPU 11 rewrites the contents of the execution program select decision information 101 stored in the ID information area 72 of the first flash ROM 12 in step S154. Thus, the upgrade program 202 is selectively executed.

In step S155, the first CPU 11 executes a hardware-reset operation to end the user program execution processing.

If no status change of the memory card slot 21 is found detected in step S151, then the first CPU 11 goes to step S156.

If the semiconductor memory 2 is found not loaded in the memory card slot 21 in step S152, the first CPU 11 goes to step S156.

If, in step S153, the subject file is not found in the storage area of the semiconductor memory 2 loaded in the memory card slot 21, then the first CPU 11 goes to step S156.

In step S156, the first CPU 11 controls each component block to execute the processing associated with the predetermined image processing defined in the user program 203.

For example, in step S156, the first CPU 11 controls the memory card interface 22 and the graphic controller 23 and supplies information to the second CPU 31, thereby supplying the GUI data to the display block 26.

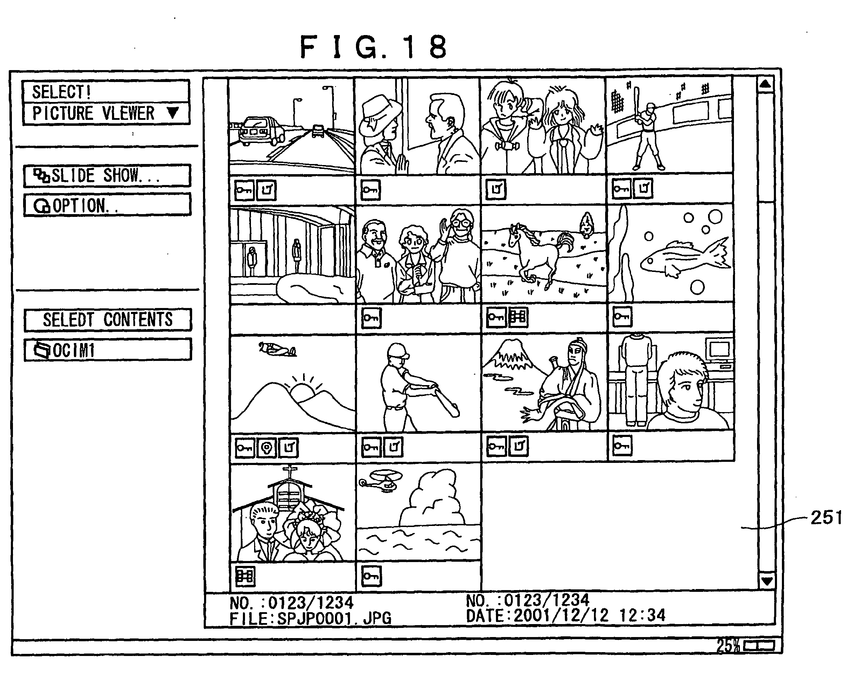

FIG. 18 shows an exemplary screen which is displayed on the display block 26 by the processing executed in step S156.

In FIG. 18, a GUI screen 251 displays a list of thumbnail images which correspond to the JPEG image data entered in the image display apparatus 1. Under the control of the display device controller 25, the display block 26 displays the GUI screen 251 shown in FIG. 18 onto the display device.

It should be noted that the processing which is executed in step S156 may be any other processing defined in the user program 203.

Having completed the processing of step S156, the first CPU 11 returns to step S151 to repeat the above-mentioned processing therefrom.

To be more specific, while executing the predetermined processing in step S156, the first CPU 11 which executes the user program 203 determines whether the subject file to be installed is ready in steps S151 through S153. If the subject file is found ready, the first CPU 11 executes a hardware reset operation after making the boot program 201 select the upgrade program by the processing of steps S154 and S155, thereby executing the boot program 201.

If the subject file to be installed is found not ready (if the status change of the memory card slot 21 is fount not detected in step S151, if the semiconductor memory 2 is found not loaded in step 152, or if the subject file is not found in step S153), then the first CPU 11 repeats the processing of step S156.

Thus, while checking if the subject file to be installed is ready, the first CPU 11 executes the user program. Consequently, the user of the image display apparatus 1 can easily execute the installation processing.

As described above, by executing hardware reset and software reset operations, the first CPU 11 can continuously execute the upgrade program 202 and the user program 203 through the'boot program 201. In the upgrade processing, the first CPU 11 controls the other CPU in accordance with the installation destination that is set, thereby easily writing two or more programs continuously.

In the above-mentioned configuration according to the invention, the subject file to be installed is supplied to the image display apparatus 1 in a state that the subject file is recorded in the semiconductor memory 2. However, the present invention is not restricted to this configuration; for example, the subject file may be supplied from communication media such as a network for example.

Referring to FIG. 1, one first flash ROM 12 and one first EEPROM 14 are connected to the first CPU 11, and one second flash memory ROM 32 and one second EEPROM 34 are connected to the second CPU 31. However, the present invention is not restricted to this configuration; for example, a plurality of flash ROMs and a plurality of EEPROMs may be connected to the first CPU 11. This same holds with the second CPU 31.

In addition, referring to FIG. 1, the first flash ROM 12, the first EEPROM 14, the second flash memory ROM 32, and the second EEPROM 34 are arranged separately. However, the present invention is not restricted to this configuration; for example, any of these storage devices may be arranged in integration with other components such as the first CPU 11 or the second CPU 31.

In the image display apparatus 1 shown in FIG. 1, the programs to be executed by the first CPU 11 are stored in the first flash ROM 12, and the data to be used by the first CPU 11 are stored in the first EEPROM 14. However, the present invention is not restricted to this configuration; for example, any data may be stored in the first flash ROM 12 and the first EEPROM 14. Not only programs but also data may be stored in the first flash ROM 12, for example. The same holds with the second flash memory ROM 32 and the second EEPROM 34, namely, any data may be stored in these storage devices.

Referring to FIG. 1, there are arranged two CPUs, the first CPU 11 and the second CPU 31, for controlling the components blocks of the image display apparatus 1. However, the present invention is not restricted to this configuration; for example, more than two CPUs may be used.

In the above-mentioned configuration, the image display apparatus which is controlled by a plurality of CPUs has been described. However, the present invention is not restricted to this image display apparatus; the present invention is applicable to any other information processing apparatuses that are controlled by a plurality of CPUs, for example, a personal computer having a plurality of CPUs for example.

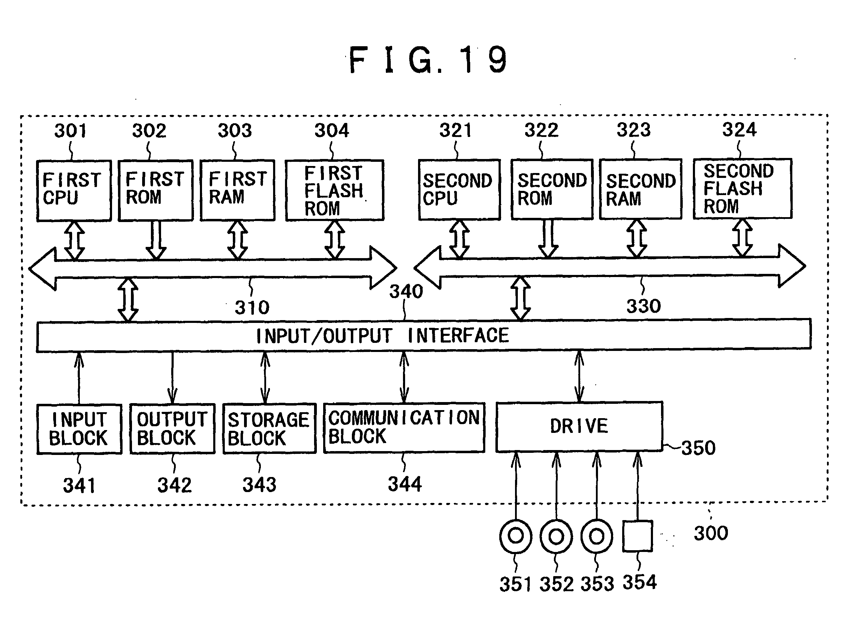

FIG. 19 shows an exemplary personal computer to which the present invention is applied.

Referring to FIG. 19, a first CPU 301 of a personal computer 300 executes various processing operations in accordance with programs stored in a first ROM 302 or a first flash ROM 304 or loaded from a storage block 343 into a first RAM 303. Also, the first RAM 303 and the first flash ROM 304 store, from time to time, the data necessary for the execution of the processing by the first CPU 301.

The storage area of the first flash ROM 304 is configured in the same manner as shown in FIG. 2; namely, a boot program area 71 for storing a boot program 201, a ID information area 72 for storing the information associated with programs and data, an upgrade program area 73 for storing an upgrade program 202, and a user program area 74 for storing user programs.

The first CPU 301, the first ROM 302, the first RAM 303, and the first flash ROM 304 are interconnected via a bus 310.

Like the first CPU 301, a second CPU 321 of the personal computer 300 executes various processing operations in accordance with programs stored in a second ROM 322 or a second flash ROM 324 or loaded from a storage block 343 into a second RAM 323. Also, the second RAM 323 and the second flash ROM 324 store, from time to time, the data necessary for the execution of the processing by the second CPU 321 as with the first RAM 303 and the first flash ROM 304.

As with the first flash ROM 304, the second flash ROM 324 is configured as shown in FIG. 2; namely, a boot program area 71 for storing a boot program 201, a ID information area 72 for storing the information associated with programs and data, an upgrade program area 73 for storing an upgrade program 202, and a user program area 74 for storing user programs.

The second CPU 321, the second ROM 322, the second RAM 323, and the second flash ROM 324 are interconnected via a bus 330.

The bus 310 and the bus 330 are connected with an input/output interface 340.

The input/output interface 340 is connected with an input block 341 based on a keyboard and a mouse, an output block 342 based on a display device such as CRT (Cathode Ray Tube) or LCD (Liquid Crystal Display) and a speaker for example, a storage block 343 based on a hard disk drive, and a communication block 344 based on a modem, a terminal adaptor, or a LAN adaptor.

The storage block 343 stores data and programs necessary for the execution of various processing operations, which is controlled by the first CPU 301 or the second CPU 321 as required, and supplies data and programs to the first RAM 303 or the second RAM 323.

The input/output interface 340 is also connected with a drive 350 on which a magnetic disk 351, an optical disk 352, a magneto-optical disk 353, or a semiconductor memory 354 is loaded from time to time. Computer programs read from these storage media are installed in the storage block 343, the first flash ROM 304, or the second flash ROM 324.

That is to say, the drive 350 is equivalent to the memory card slot 21 shown in FIG. 1. The recording media storing a program or data to be installed are loaded to the drive 350. The recording media are, for example, the magnetic disk 351, the optical disk 352, the magneto-optical disk 353, and the semiconductor memory 354.

The input/output interface 340 is equivalent to the memory card interface 22 shown in FIG. 1. Under the control of the first CPU 301 or the second CPU 321, the interface 340 monitors the drive 350 to determine whether any one of the above-mentioned recording media has been loaded on the drive 350, and supplies the information thereof to the first CPU 301 or the second CPU 321.

In the case of the first CPU 11 and the second CPU 31 of the image display apparatus 1 shown in FIG. 1, the processing operations to be executed are divided beforehand into groups which are separately executed by these CPUs to control different component blocks. On the other hand, the first CPU 301 and the second CPU 321 of the personal computer 300 shown in FIG. 19 are the same in configuration and the processing operations to be executed are not divided beforehand.

Therefore, any of the first CPU 301 and the second CPU 321 may be made correspond to the first CPU 11 shown in FIG. 1. That is to say, the boot processing shown in FIG. 6 and the upgrade processing shown in FIGS. 8 and 9 may be executed by any one of the first CPU 301 and the second CPU 321 or by both.

For example, if the first CPU 301 is made correspond to the first CPU 11 shown in FIG. 1, then the first CPU 301 executes the boot program 201, the upgrade program 202, and the user program 203 as shown in FIG. 5.

That is to say, as with the first CPU 11, the first CPU 301 executes the same processing as the boot processing described with reference to the flowchart of FIG. 6, the ID information confirmation processing described with reference to the flowchart of FIG. 7, the upgrade processing described with reference to the flowcharts of FIGS. 8 and 9, the rewrite processing described with reference to the flowcharts of FIGS. 14 and 15, and the user program execution processing described with reference to the flowchart of FIG. 17. The first CPU 301 installs the supplied program and data into the first flash ROM 304.

Also, the first CPU 301 controls the second CPU 321 to make it execute the boot-dedicated program stored in the second ROM 322 for example, thereby executing the same processing as the write processing described with reference to the flowchart shown in FIG. 16. Consequently, the second CPU 321 can install the supplied programs and data into the second flash ROM 324.

Thus, by executing hardware reset and software reset operations, the first CPU 301 can continuously execute the upgrade program 202 and the user program 203 through the boot program 201. In the upgrade processing, the first CPU 301 can control the other CPU in accordance with the installation destination that is set, thereby easily writing two or more programs continuously.

It should be noted that, as described above, the second CPU 321 may be made correspond to the first CPU 11 to execute the above-mentioned processing operations.

In the above-mentioned configuration according to the invention, the programs and data stored in any of the recording media such as the magnetic disk 351, the optical disk 352, the magneto-optical disk 353, and the semiconductor memory 354 are installed into the first flash ROM 304 or the second flash ROM 324. However, the present invention is not restricted to this configuration; for example, these programs and data may be installed in the storage block 343.

Alternatively, the programs and data to be installed may be supplied not from recording media but through the communication block 344.

With reference to FIG. 19, the CPUs for controlling the component blocks are composed of the first CPU 301 and the second CPU 321. However, the present invention is not restricted to this configuration; for example, any number of CPUs more than one may be used.

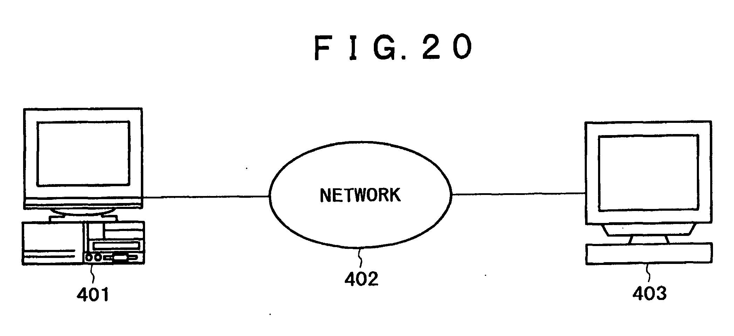

Further, a part of the internal configuration of the personal computer 300 shown in FIG. 19 may be configured as an other personal computer; for example, an information processing system in which a plurality of personal computers are communicably interconnected as shown in FIG. 20.

Referring to FIG. 20, a personal computer 401 is connected to a personal computer 403 via a network 402 typified by the Internet or a LAN (Local Area Network). The personal computer 401 can communicate with the personal computer 403 via the network 402.

For example, the CPU (not shown) of the personal computer 401 shown in FIG. 20 is made correspond to the first CPU 301 shown in FIG. 19 and the CPU (not shown) of the personal computer 403 shown in FIG. 20 is made correspond to the second CPU 321 shown in FIG. 19. Therefore, the CPU of the personal computer 401 executes the boot program 201, the upgrade program 202, and the user program 203.

That is to say, the CPU (not shown) of the personal computer 401 is made execute the same processing as the boot processing described with reference to the flowchart of FIG. 6, the ID information confirmation processing described with reference to the flowchart of FIG. 7, the upgrade processing described with reference to the flowcharts of FIGS. 8 and 9, the rewrite processing described with reference to the flowcharts of FIGS. 14 and 15, and the user program execution processing described with reference to the flowchart of FIG. 17.

The CPU (not shown) of the personal computer 401 installs the programs and data stored in a recording medium (not shown) loaded on a drive (not shown) into a storage block (not shown). In addition, the CPU of the computer 401 controls the CPU (not shown) of the personal computer 403 via the network 402 so as to execute the boot-dedicated program, thereby executing the same processing as the write processing described with reference to the flowchart shown in FIG. 16. At the same time, the CPU of the computer 401 supplies these programs and data via the network 402 and installs them into the storage block (not shown).

Thus, the CPU (not shown) of the personal computer 401 can continuously execute the upgrade program 202 and the user program 203 through the boot program 201. Further, the CPU of the computer 401 can control the CPU of the other personal computer 403 via the network 402, thereby easily writing a plurality of programs and data continuously.

It should be noted that the above-mentioned information processing system is configured by the two personal computers 401 and 403 interconnected through the network 402; however, the present invention is not restricted to this configuration. For example, any number of personal computers may constitute this information processing system.

The above-mentioned processing operations can be executed by hardware as well as software. When the above-mentioned sequence of processing operations is executed by software, the programs constituting the software are installed in a computer which is built in dedicated hardware equipment or installed, from a network or recording media, into a general-purpose personal computer for example in which various programs may be installed for the execution of various functions.

As shown in FIGS. 1 or 19, these recording media are constituted by not only a package media distributed separately from the apparatus itself, but also the ROMs (not shown) provided to users as incorporated in the apparatus itself. The package media storing programs are made up of the magnetic disk 351, the optical disk 352, the magneto-optical disk 353, or the semiconductor memory 2 or 354. The magnetic disk 351 includes flexible disks, the optical disk 352 includes CD-ROM (Compact Disk Read Only Memory) and DVD (Digital Versatile Disk), and the magneto-optical disk 353 includes MD (Mini-Disk). The ROMs storing programs are incorporated in the first CPU 11, the second CPU 31, the first CPU 301, and the second CPU 321.

It should be noted herein that the steps for describing each program recorded in recording media include not only the processing operations which are sequentially executed in a time-dependent manner but also the processing operations which are executed concurrently or discretely.

It should also be noted that the term "system" as used herein denotes an entire apparatus configured by a plurality of component units.

### Industrial Applicability

As described and according to the information processing apparatus and method, recording medium, and program associated with the present invention, programs can be rewritten. Especially, in an information processing apparatus having a plurality of CPUs and storage blocks, programs can be easily and continuously written to the plurality of storage blocks under the control of the plurality of CPUs.

## Claims

1. An information processing apparatus having a plurality of control blocks and a plurality of storage blocks, and a main control block, which is one of said plurality of control blocks, controlling the other of said plurality of control blocks to store software from a recording medium into said plurality of storage blocks, said information processing apparatus comprising:
first acquisition means for acquiring an instruction associated with the storage of said software to be supplied from said main control block;
request means for requesting said main control block for said software;
second acquisition means for acquiring said software supplied in response to the request by said request means; and
storage control means for storing said software acquired by said second acquisition means by controlling said plurality of storage blocks.

2. The information processing apparatus according to claim 1, wherein said instruction includes information associated with said software and information associated with any of said plurality of storage blocks in which said software is stored.

3. The information processing apparatus according to claim 2, further comprising:
storage block setting means for selecting, from said plurality of storage blocks, one that is specified by said instruction acquired by said first acquisition means and setting the selected storage block as a storage block for storing said software acquired by said acquisition means;
said storage control means storing said software into said storage block set by said storage block setting means.

4. The information processing apparatus according to claim 1, still further comprising:
confirmation means for confirming whether said software stored in said storage block under the control of said storage control means is normal or not; and
supply means for supplying a confirmation result obtained by said confirmation means to said main control block.

5. The information processing apparatus according to claim 4, wherein if, on the basis of said confirmation result supplied from said supply means, the processing of storing said software into said storage block is found normally completed, said main control block controls a display block to display information indicative of the normal completion of said storage processing.

6. The information processing apparatus according to claim 4, wherein if, on the basis of said confirmation result supplied from said supply means, the processing of storing said software into said storage block is found not normally completed, said main control block controls a display block to display information indicative that an error has taken place in the storage processing.

7. The information processing apparatus according to claim 1, wherein said storage medium in which said software is stored is a removable memory card, and said main control block updates a program or data stored in said plurality of storage blocks by use of a program or data acquired from said memory card.

8. The information processing apparatus according to claim 1, wherein said storage control means compares version information of said software acquired by said second acquisition means with version information of software stored in said storage block and, if there is a mismatch, controls said storage block to store said software acquired by said second acquisition means.

9. An information processing method for an information processing apparatus having a plurality of control blocks and a plurality of storage blocks, and a main control block, which is one of said plurality of control blocks, controlling the other of said plurality of control blocks to store software from a recording medium into said plurality of storage blocks, said information processing method comprising:
a request step for requesting said main control block for said software;
an acquisition control step for controlling the acquisition of said software supplied in response to a request by said request step; and
a storage control step for storing said software of which acquisition is controlled by said acquisition control step, by controlling said plurality of storage blocks on the basis of an instruction supplied from said main control block.

10. A recording medium recording a computer-readable program for an information processing apparatus having a plurality of control blocks and a plurality of storage blocks, and a main control block, which is one of said plurality of control blocks, controlling the other of said plurality of control blocks to store software from a recording medium into said plurality of storage blocks, said computer-readable program comprising:
a request step for requesting said main control block for said software;
an acquisition control step for controlling the acquisition of said software supplied in response to a request by said request step; and
a storage control step for storing said software of which acquisition is controlled by said acquisition control step, by controlling said plurality of storage blocks on the basis of an instruction supplied from said main control block.

11. A program executable by a computer for controlling an information processing apparatus having a plurality of control blocks and a plurality of storage blocks, and a main control block, which is one of said plurality of control blocks, controlling the other of said plurality of control blocks to store software from a recording medium into said plurality of storage blocks, said program comprising:
a request step for requesting said main control block for said software;
an acquisition control step for controlling the acquisition of said software supplied in response to a request by said request step; and
a storage control step for storing said software of which acquisition is controlled by said acquisition control step, by controlling said plurality of storage blocks on the basis of an instruction supplied from said main control block.
